# EUROPÄISCHE PATENTSCHRIFT

(11) **EP 0 480 167 B1**
(45) Veröffentlichungstag und Bekanntmachung des Hinweises auf die Patenterteilung: **18.05.1994**
(21) Anmeldenummer: 91114784.1
(22) Anmeldetag: 03.09.1991
(51) Int. Cl.: C01G 5/00, B01J 2/04, C01G 5/02

(54) **Verfahren zur Herstellung von staubfreiem Silbernitrat**
Process for the preparation of dustfree silver nitrate
Procédé pour la préparation de nitrate d'argent non-poussiéreux

(30) Priorität: 09.10.1990 DE 4031952
(43) Veröffentlichungstag der Anmeldung: 15.04.1992
(73) Patentinhaber: Degussa Aktiengesellschaft, 60311 Frankfurt (DE)
(72) Erfinder: Gerner, Roland, Dr. Dipl.-Chem., W-6458 Rodenbach (DE); Hollmann, Dieter, Dr. Dipl.-Chem., W-6458 Rodenbach (DE)

(56) Entgegenhaltungen:
- FR-A- 2 078 585
- J.M.EDER 'AUSFUHRLICHES HANDBUCH DER PHOTOGRAPHIE' 1906 , VERLAG VON W.KNAPP , HALLE A.S.

## Beschreibung

Die Erfindung betrifft ein Verfahren zur Herstellung von staubfreiem Silbernitrat durch Verdüsen einer Silbernitratschmelze und Verfestigung der gebildeten Tropfen in einem Kühlmedium.

Silbernitrat findet eine breite technische Anwendung, insbesondere in der Fotoindustrie. Es wird normalerweise in Form von Kristallen, wie sie bei der Kristallisation aus wässriger Lösung anfallen, in den Handel gebracht und gehandhabt. Bei der Handhabung von Silbernitratpulver kann es durch Aufwirbelung des staubförmigen Feinanteils zur gesundheitlichen Gefährdung der mit Silbernitrat umgehenden Menschen beispielsweise in Form von Verätzungen kommen.

Aufgrund der sehr unterschiedlichen Größe der Kristalle zeigt Silbernitrat ein uneinheitliches Schütt- und Rieselverhalten, was zum Beispiel für den Einsatz automatischer Dosieranlagen bei der Abpackung von Silbernitratmengen nachteilig ist.

Staubfreies Silbernitrat ist bisher nicht bekanntgeworden.

FR-A-2 078 585 beschreibt ein Verfahren zur Herstellung diverser Granulate, darunter Silberhalogenide, bei dem die einschlägige Verbindung als Schmelze einem Kühlmedium zugefügt wird.

Es war die Aufgabe der vorliegenden Erfindung, ein Verfahren zur Herstellung von staubfreiem Silbernitrat durch Verdüsen einer Silbernitratschmelze und Verfestigung der gebildeten Tropfen in einem Kühlmedium zu entwickeln, dessen Produkt in der Fotoindustrie einsetzbar ist.

Diese Aufgabe wird erfindungsgemäß dadurch gelöst, daß das Silbernitrat in der Schmelze eine Reinheit von mehr als 99 % und einen pH-Wert von 2 bis 6 aufweist, gemessen als 10%ige wässrige Lösung, wobei das Aufschmelzen, das Verdüsen und die Verfestigung der Tropfen unter Lichtabschluss durchgeführt werden müssen.

Vorzugsweise sollte die Reinheit des Silbernitrats mehr als 99,9 % betragen und der pH-Wert zwischen 4,0 und 5,5 liegen.

Die Verdüsung der Silbernitratschmelze erfolgt vorteilhafterweise in einer Vorrichtung, die aus einem Schmelzbehälter für das Silbernitrat, einer oder mehreren schwingenden Düsen und einer Tropfenfallstrecke mit Kühlung besteht.

Eine solche Vorrichtung ist beispielsweise in der deutschen Patentanmeldung P 40 22 648.4 beschrieben. Es entstehen Silbernitratkügelchen einheitlicher Größe von ca. 50 µm bis etwa 1 mm Durchmesser, je nach dem eingesetzen Düsendurchmesser. Das Produkt enthält keinen staubförmigen Feinanteil und besitzt eine hohe Rieselfähigkeit, so daß es gut dosierbar und handhabbar ist.

Folgendes Beispiel soll das erfindungsgemäße Verfahren näher erläutern:
2 kg Silbernitrat (Reinheit > 99,9 %) wurden in einem Behälter unter Lichtausschluß aufgeschmolzen. Es hatte einen pH-Wert von 4,8 (gemesen an einer 10%igen wässrigen Lösung). Die Schmelze wurde auf 220° C temperiert und einer mit einer Frequenz von 800 Hz schwingenden Düse mit einem Düsendurchmesser von 350 µm zugeführt. Die mit einem Inertgas abgekühlten Kügelchen besaßen einen einheitlichen Durchmesser von etwa 700 µm, ohne Fein- und Grobanteil. Das Verdüsen und Abkühlen erfolgte ebenfalls unter Lichtausschluß. Das so hergestellte Silbernitratpulver wies keine Verfärbungen auf und war für den Einsatz in der Fotoindustrie hervorragend geeignet.

## Patentansprüche

1. Verfahren zur Herstellung von staubfreiem Silbernitrat durch Verdüsen einer Silbernitratschmelze und Verfestigung der gebildeten Tropfen in einem Kühlmedium,
dadurch gekennzeichnet,
daß das Silbernitrat in der Schmelze eine Reinheit von mehr als 99 % und einen pH-Wert von 2 bis 6 aufweist, gemessen als 10 %ige wässrige Lösung, wobei das Aufschmelzen, das Verdüsen und die Verfestigung der Tropfen unter Lichtausschluß durchgeführt werden müssen.

2. Verfahren nach Anspruch 1,
dadurch gekennzeichnet,
daß die Reinheit des Silbernitrats größer als 99,9 % ist und der pH-Wert zwischen 4,0 und 5,5 liegt.

## Claims

1. Process for the manufacture of dust-free silver nitrate by atomising a silver nitrate melt and solidifying in a cooling medium the drops which form, characterised in that the silver nitrate in the melt exhibits a purity greater than 99% and a pH of from 2 to 6, measured as a 10%-concentrated aqueous solution, wherein the melting down, atomisation and solidification of the drops must be carried out with exclusion of light.

2. Process according to Claim 1, characterised in that the purity of the silver nitrate is greater than 99.9% and the pH is between 4.0 and 5.5.

## Revendications

1. Procédé d'obtention de nitrate d'argent dépourvu de poussière par atomisation d'un produit de fusion du nitrate d'argent et solidification des gouttes formées dans un milieu de refroidissement, caractérisé en ce que le nitrate d'argent dans le produit de fusion possède une pureté de plus de 99 % et une valeur de pH de 2 à 6, mesurée sous forme de solution aqueuse à 10 %, et la fusion, l'atomisation et la solidification des gouttes doivent être effectuées à l'abri de la lumière.

2. Procédé selon la revendication 1, caractérisé en ce que la pureté du nitrate d'argent est plus grande que 99,9 % et que la valeur du pH se situe entre 4,0 et 5,5.
